# EUROPÄISCHE PATENTSCHRIFT

(11) **EP 2 734 803 B1**
(45) Veröffentlichungstag und Bekanntmachung des Hinweises auf die Patenterteilung: **18.01.2017**
(21) Anmeldenummer: 12738036.8
(22) Anmeldetag: 12.07.2012
(51) Int. Cl.: F28D 20/00

(54) **SPEICHERBEHÄLTER FÜR FLUIDE**
STORAGE TANK FOR FLUIDS
RÉSERVOIR DE STOCKAGE POUR FLUIDES

(30) Priorität: 21.07.2011 DE 102011108235
(43) Veröffentlichungstag der Anmeldung: 28.05.2014
(73) Patentinhaber: Linde Aktiengesellschaft, 80331 München (DE)
(72) Erfinder: POSSELT, Heinz, 83043 Bad Aibling (DE); KROL, Marian, 83109 Grosskarolinenfeld (DE); KÖPF, Hubert, 85586 Poin (DE)
(74) Vertreter: Meilinger, Claudia Sabine
(86) Internationale Anmeldenummer: PCT/EP2012/002938
(87) Internationale Veröffentlichungsnummer: WO 2013/010652

(56) Entgegenhaltungen:
- GB-A- 2 287 057
- US-A1- 2011 017 196

## Beschreibung

Die Erfindung betrifft einen Speicherbehälter zur Aufnahme eines heißen Fluids mit einer Temperatur von mindestens 200°C aufweisend eine Außenschale, eine Innenschale sowie eine dazwischen liegende thermische Dämmschicht gemäß dem Oberbegriff des Anspruchs 1. US 2011/017196 A1 offenbart einen derartigen Speicherbehälter. Des Weiteren betrifft die Erfindung die Verwendung eines solchen Speicherbehälters zur Energiespeicherung in solarthermischen Kraftwerken und eine Verwendung zum Nachrüsten herkömmlicher Speicherbehälter.

Herkömmliche Speicherbehälter zur Aufnahme heißer Fluide, wie z.B. flüssige Halbleiter oder flüssiger Salze, weisen in der Regel eine zylindrisch geformte Behälterwand auf. Die Behälterwand erwärmt sich bis sie die Temperatur des im Speicherbehälter gespeicherten heißen Fluids annimmt. Bis zu einer Temperatur von 400°C können für die Behälterwand niedriglegierte C-Stähle verwendet werden. Bei höheren Temperaturen muss jedoch auf austenitische Cr-Ni-Stähle zurückgegriffen werden. Die Behälterwand ist in der Regel außen von einer thermischen Dämmung umgeben. Für den Fall, dass das Fluid z.B. einen bestimmten Chloridgehalt überschreitet, können nach dem gegenwärtigen Stand der Technik wegen der Korrosionswirkung nur teure Nickelbasiswerkstoffe wie z.B. 1.4876, 1.4958 und 1.4959 (INCOLOY® Alloy 800 H / HT) verwendet werden. Die erforderliche Stärke der Behälterwand und das gewünschte Temperaturniveau des zu speichernden Fluids hat bei diesen Werkstoffen einen wesentlichen Einfluss auf die Herstellungskosten eines solchen Speicherbehälters. Es gibt eine Grenze für ein wirtschaftlich noch sinnvolles maximales Speichervolumen, da ein steigendes Volumen des Speicherbehälters und eine höhere Temperatur jeweils eine dickere Behälterwandstärke erforderlich machen, um die geforderte Festigkeit zu erreichen. Ab einer bestimmten Wandstärke ist es nötig, die Schweißnähte mit erheblichem technischem Aufwand zu glühen, wodurch die Herstellungskosten noch zusätzlich erhöht werden.

Bekannt ist auch ein System eines zylindrischen Speicherbehälters mit einer thermischen Innenisolierung. Der Speicherbehälter ist dabei mit einer dünnwandigen Innenschale versehen, die durch eine temperaturbeständige und lastabtragende thermische Dämmung mechanisch gestützt wird. Die thermische Dämmung ist bei der bekannten Ausführung so ausgelegt, dass die Temperatur der Behälterwand 400°C nicht überschreitet. Es ist bei einer solchen Ausführung daher eine zusätzliche Außendämmung erforderlich. Die thermische Ausdehnung der zylindrisch geformten Innenschale, die z.B. bei der Befüllung mit heißem Fluid auftritt, wird durch elastische Sicken in dieser dünnwandigen Schale ermöglicht. Um die auftretende radiale und axiale thermische Ausdehnung zu kompensieren, werden dabei nach dem Stand der Technik Kreuzungspunkte von Sicken, die in der Herstellung sehr aufwendig sind, in die dünnwandige Innenschale eingearbeitet.

Im Hinblick auf die thermische Ausdehnung eines bekannten zylindrischen Speicherbehälters ist auch dem Übergang des Bodenblechs zur Behälterwand besondere Aufmerksamkeit zu schenken. Es ist in der Regel erforderlich, die Innenschale durch viele Festpunkte mit der Außenschale zu verbinden, um eine definierte Bewegung des Systems zu gewährleisten. Aufgrund dieser Anforderungen und Gegebenheiten werden die bisher bekannten Systeme zur Speicherung heißer Fluide, z.B. zur Speicherung von geschmolzenem Salz, mit einer Innenisolierung als sehr teuer eingeschätzt.

Auf dem Gebiet der solarthermischen Kraftwerke sind darüber hinaus mehrere Arten von Speicherbehältern und Speichersystemen bekannt. Beispielsweise werden zwei Speicherbehälter, einer für wärmeres und einer für kälteres Fluid eingesetzt, um die Energie in Niedriglastzeiten zu speichern und in Hochlastzeiten wieder abzugeben. Allen solarthermischen Kraftwerken ist gemein, dass sie mit Hilfe einer Spiegelanordnung Sonnenenergie bündeln und auf einen Empfänger lenken, der diese Energie aufnimmt, z.B. dadurch, dass in seinem Inneren ein Medium erwärmt wird. Als Medium haben sich verschiedene Fluide als geeignet erwiesen. Als besonders geeignet gelten derzeit geschmolzene, also flüssige Salze. Das erwärmte Medium wird dann beispielsweise einem Dampferzeuger zugeführt und der erzeugte Dampf kann in einer Turbine zur Stromerzeugung entspannt werden.

Eine der größten Herausforderungen für die wirtschaftliche Stromerzeugung mit einem solarthermischen Kraftwerk ist bekanntlich die Schwankung des Strombedarfs über den Tag, da der Strombedarf nur teilweise mit den Sonnenstunden korreliert. Allgemein unterscheidet man drei Bedarfskategorien: Niedriglast, also wenig Strombedarf beim Verbraucher; Normallast, also durchschnittlicher Strombedarf beim Verbraucher, und Hoch- oder Spitzenlast. Beispielsweise die Hochlastzeit am Abend fällt in vielen Ländern und/oder in einem nicht unerheblichen Teil des Jahres auf eine Uhrzeit nach Sonnenuntergang. Daher ist es wesentlich für den technischen und wirtschaftlichen Erfolg eines solarthermischen Kraftwerks von der Sonne aufgenommene Energie speichern und zu einem späteren Zeitpunkt wieder abgeben zu können.

Aufgabe der vorliegenden Erfindung ist es nun einen gegenüber dem Stand der Technik verbesserten, besonders auch im Hinblick auf die Herstellungs- und Wartungskosten verbesserten Speicherbehälter für heiße Fluide zur Verfügung zu stellen.

Die gestellte Aufgabe wird dadurch gelöst, dass die Innenschale in Form eines auf der Spitze stehenden geraden Kreiskegels ausgeführt ist. Besonders vorteilhaft ist es dabei möglich die Innenschale dünn auszuführen, da eine durch Einspeisen von heißem Fluid verursachte thermische Belastung durch die Besonderheit der Kegelform nicht zu einer vorwiegend radialen und somit die Festigkeit des Speicherbehälters beeinträchtigenden thermischen Ausdehnung führt. Vielmehr wurde gefunden, dass durch die Form des geraden Kreiskegels die Resultierenden der Ausdehnungskräfte, die bei einer Erwärmung wirken, im Wesentlichen parallel zu der Mantelfläche des geraden Kreiskegels verlaufen. Bildlich gesprochen kann man sagen, dass sich die Innenschale also bei thermischer Belastung parallel zum Kegelmantel bzw. in Richtung der Erzeugenden des geraden Kreiskegels "nach oben" ausdehnt, also die Höhe des Kreiskegels etwas zunimmt, nicht hingegen der Durchmesser des Kreiskegels auf einer bestimmten Höhe. Der Durchmesser auf einer bestimmten Höhe, wobei Höhen unterhalb der Ausgangshöhe gemeint sind, bleibt vielmehr konstant. Die thermische Ausdehnung der Innenschale ist durch die erfindungsgemäße besondere Form annähernd formerhaltend.

Die Temperatur des Fluids liegt bevorzugt über 200°C, besonders bevorzugt im Bereich von 400°C bis 650°C, insbesondere im Bereich von 590°C bis 610°C, nochmals bevorzugt um die 600°C.

Die Innenschale kann beispielsweise eine salzdichte und salzbeständige Membran, oder einen niedriglegierten C-Stahl oder einen austenitischen Cr-Ni-Stahl oder einen Nickelbasiswerkstoff oder ein anderes geeignetes Material aufweisen.

Bevorzugt liegt die Innenschale schwimmend auf der thermischen Dämmschicht auf, die ihrerseits bevorzugt lastabtragend ausgebildet ist, bevorzugt ebenfalls in Form eines auf der Spitze stehenden geraden Kreiskegels. Dabei weist die thermische Dämmschicht beispielsweise mineralische Materialien auf, wie z.B. Calcium-Silikat-Steine oder Schaumglasblöcke oder eine Kombination aus solchen oder ähnlichen Materialien. Mit besonderem Vorteil wird die thermische Dämmschicht in ihrer Dicke so ausgeführt, dass die Außenschale, deren nahezu gesamte Oberfläche außen Wärme an die Umgebung abgeben kann, in der Regel unabhängig vom Füllstand des Speicherbehälters, zumindest jedoch nach einer bestimmten Zeit nach einer größeren Füllstandsänderung, annähernd Umgebungstemperatur aufweist. Die Außenschale kann daher mit besonderem Vorteil in einer Beton-Konstruktion ausgeführt werden. Bevorzugt wird hierbei Stahlbeton eingesetzt.

Besonders bevorzugt ist die Außenschale lastabtragend ausgebildet, bevorzugt ebenfalls in Form eines auf der Spitze stehenden geraden Kreiskegels oder bevorzugt als lastaufnehmendes Vieleck, welches besonders bevorzugt innen mit einer Auskleidung versehen ist, welche die Form eines auf der Spitze stehenden geraden Kreiskegels als nach innen gewandte Oberflächenform bildet. Beispielsweise eignet sich Lehm als Material für die genannte Auskleidung. Bei dieser Ausprägung der vorliegenden Erfindung ist es darüber hinaus besonders zweckmäßig, den die Außenschale bildenden Kegel durch Beine oder Stützen, z.B. Stahlbeton-Stützen oder Stahl-Stützen, abzustützen.

Durch diese besonders vorteilhafte Lastverteilung ist es möglich die schwimmende Innenschale sehr dünn, z.B. lediglich 2mm stark, auszuführen, wodurch insbesondere bei teuren Werkstoffen die Wirtschaftlichkeit eines erfindungsgemäßen Speicherbehälters nochmals erhöht werden kann. Das Konzept der schwimmenden Innenschale in der erfindungsgemäßen Kegelform, das auf aufwendige mechanische Verbindungen zur Außenschale verzichtet, ermöglicht auch für sich dünne Materialstärken, da aufgrund der formerhaltenden Eigenschaften die Innenschale mit Versteifungen versehen werden kann, die die thermische Ausdehnung nicht behindern.

Des Weiteren ist ein erfindungsgemäßer Speicherbehälter zweckmäßigerweise mit einem Dach ausgestattet, das zumeist eine, bevorzugt thermisch gedämmte, abgehängte Decke aufweist.

Zweckmäßigerweise ist eine mechanische Trennschicht zwischen der Innenschale und der thermischen Dämmschicht vorgesehen. Diese mechanische Trennschicht unterstützt das Konzept der schwimmenden Innenschale (auch "floating shell" genannt) zusätzlich. Beispielsweise ist magerer Lehm zur Verwendung in der mechanischen Trennschicht ein geeignetes Material.

Gemäß einer besonders vorteilhaften Ausführungsform der Erfindung sind, insbesondere bei hohen Temperaturen des Fluids, lediglich entlang einiger weniger Erzeugenden des geraden Kreiskegels Sicken zur Kompensation von Schwankungen in der thermischen Ausdehnung des Materials der Innenschale vorgesehen. Es können damit auch Schwankungen ausgeglichen werden, die z.B. durch unterschiedliche Setzungen der thermischen Dämmschicht entstehen.

Mit besonderem Vorteil ist der Öffnungswinkel des die Innenschale formenden geraden Kreiskegels so gewählt, dass die Oberfläche eines festgelegten Soll-Füllvolumen des Speicherbehälters minimiert ist. Durch diese Ausgestaltung wurde ein exakt formerhaltender Speicherbehälter gefunden. Durch diese Formgebung werden sowohl der Materialbedarf für den Speicherbehälter und besonders für die Innenschale, als auch die Wärmeverluste des Fluids über seine Oberfläche vorteilhaft minimiert. Des Weiteren ist bei dieser Ausgestaltung die Formerhaltung optimiert. Thermische Belastungen, z.B. durch Einfüllen von Fluid, führen nicht zu einer Verformung der Innenschale.

Die Optimierung der formerhaltenden Eigenschaften kann z.B. dadurch angenähert werden, dass die Mantelfläche des geraden Kreiskegels minimiert wird. Dabei ergibt sich theoretisch ein optimaler Öffnungswinkel von ca. 70,5°. In der Praxis haben sich jedoch Öffnungswinkel im Bereich von 65° bis 75°, bevorzugt im Bereich von 68° bis 72° und besonders bevorzugt 70° als für die vorliegende Erfindung besonders geeignet erwiesen.

Die genannten thermischen Belastungen entstehen primär durch Einfüllen und durch Entnahme des zu speichernden Fluids. Prinzipiell sind zwei Arten der Speicherung von Fluiden mit einem unteren und einem oberen Temperaturniveau zu unterscheiden, die beide ermöglichen diese Temperaturniveaus weitgehend getrennt zu halten: Die Speicherung in einem Speicherbehälter als Schichtenspeicher und die Speicherung in zwei getrennten Speicherbehältern. Die vorliegende Erfindung ist grundsätzlich für beide Speicherarten geeignet.

Bevorzugt ist die Innenschale zum Speichern eines Fluids mit höherem Chloridgehalt geeignet ausgebildet. Besonders bevorzugt kommt ein flüssiges Salz mit höherem Chloridgehalt als 0.1% als Fluid zum Einsatz. Dabei kann vorteilhaft und kostengünstig auf Salz zurückgegriffen werden, das hinsichtlich seines Chlorgehaltes nicht entsprechend aufbereitet wurde. Als besonders geeignet hat sich z.B. sog. Solar Salt (ca. 60% NaNO3 und 40% KNO3) zum Einsatz als sog. Wärmeträgersalz erwiesen. Beim Einsatz von höher chlorhaltigem Salz weist die Innenschale oder zumindest die Kontaktfläche der Innenschale mit dem Salz zweckmäßigerweise einen geeigneten Werkstoff auf, wie z.B. einen zur Gruppe der bereits eingangs erwähnten Nickelbasiswerkstoffe gehörenden Werkstoff. Da solche Werkstoffe teuer sind, ist die erfindungsgemäß dünne Ausbildung der Innenschale hier von besonderem Vorteil.

Die Verwendung eines Speicherbehälters nach einem der Ansprüche 1 bis 7 zur Speicherung von in einem solarthermischen Kraftwerk umgewandelter Sonnenenergie in Form eines heißen Fluids, bevorzugt eines heißen flüssigen Salzes mit einer Temperatur im Bereich von 500°C bis 650°C, bevorzugt 570°C bis 610°C, besonders bevorzugt 600°C, stellt eine vorteilhafte Weiterbildung der vorliegenden Erfindung dar.

Eine andere vorteilhafte Weiterbildung der Erfindung sieht eine Verwendung eines Speicherbehälters nach einem der Ansprüche 1 bis 7 als Einsatz in einem herkömmlichen, beispielsweise in der Form eines Zylinders ausgebildeten Speicherbehälter vor. Das dabei entstehende tote Restvolumen des herkömmlichen Speicherbehälters ist zweckmäßigerweise mit wärmedämmenden Materialien wie z.B. Lehm, Sand, Wolle, Mineralwolle oder Ziegel gefüllt.

Eine weitere vorteilhafte Weiterbildung der Erfindung sieht vor, dass zur Reduktion eines nicht nutzbaren Salzvolumens eine Salztransferpumpe innerhalb der Innenschale vorgesehen ist. Bevorzugt ist diese mittig, also entlang der Mittelachse des geraden Kreiskegels im Bereich der Spitze des Kegels innerhalb der Innenschale angeordnet. Gemäß einer weiteren vorteilhaften Ausgestaltung ist die Salztransferpumpe in radialer Richtung durch ein in die Spitze des Kegels eingebautes Gleitlager fixiert.

Ferner kann die vorliegende Erfindung dadurch weitergebildet werden, dass eine Drainageleitung im Bereich der Spitze des Kegels vorgesehen ist, durch die sich im Fluid absetzende Verunreinigungen abgelassen werden können. Das nicht nutzbare Tankvolumen kann dadurch vorteilhaft dauerhaft verringert bleiben.

Gemäß einer weiteren vorteilhaften Ausgestaltung der Erfindung ist es möglich die Gesamthöhe des Speicherbehälters zu reduzieren, indem die Spitze des kegelförmigen Speicherbehälters, die aufgrund der relativ kleinen Oberfläche nur eine geringe thermische Last aufweist, bis zu einer bestimmten Höhe des Kegels im Erdboden versenkt ist. Dies ist dazu geeignet die Baukosten zu reduzieren und die Erscheinungsform einer solchen technischen Anlage und damit die Akzeptanz in der Nachbarschaft zu verbessern.

Auch hinsichtlich der Erdbebensicherheit weist die vorliegende Erfindung eine verbesserte Ausgestaltung auf: Auf den Innenflächen der Innenschale des Speicherbehälters können Schwallbleche angebracht sein, die im Falle eines Erdbebens die Bewegung des gespeicherten Fluids reduzieren.

In der Regel weist ein solcher Speicherbehälter, wie er in der vorliegenden Erfindung beschrieben wird, ein massives Betonfundament auf. Zur Erhöhung der Sicherheit kann auf dieses Fundament eine z.B. ringförmige Wand aufgesetzt sein (sog. "second containment"), deren Höhe bis zu ca. ein Drittel der Kegelhöhe einnimmt. Die vorab beschriebenen Betonfüße zur Abstützung des Kegels können dabei innerhalb oder außerhalb dieser Wand angebracht sein.

Gemäß einer alternativen Ausführungsform der vorliegenden Erfindung ist die Außenschale als Stahl-Konstruktion ausgebildet. Bei dieser Ausführungsform kann die thermische Dämmschicht z.B. dünner ausgeführt werden, da die als Stahl-Konstruktion ausgeführte Außenschale mit einer höheren Temperatur beaufschlagt werden darf als eine Beton-Konstruktion. Beispielsweise kann eine Stahl-Konstruktion aus niedriglegiertem C-Stahl einer Temperatur von max. 400°C ausgesetzt werden, ohne die Eigenschaften dieser Stahl-Konstruktion in irgendeiner Weise negativ zu beeinflussen. Die Außenschale wird bei dieser Ausführungsform zumindest z.T. von einer Außendämmung umgeben. Dies trifft sowohl auf die Außenschale selbst zu, wie auch auf ggf. vorhandene Stützen, die die Außenschale z.B. auf einem Fundament abstützen. Die Stahl-Konstruktion ist dabei ähnlich der bereits beschriebenen Beton-Konstruktion bevorzugt lastabtragend ausgebildet.

Gemäß einer weiteren alternativen Ausführungsform der vorliegenden Erfindung weist die Außenschale sowohl Beton- bzw. Stahltbeton-Komponenten als auch Stahl-Komponenten auf.

Die Erfindung bietet eine ganze Reihe von weiteren Vorteilen, von denen im Folgenden nur einige wenige beispielhaft genannt werden:
Durch die Form des erfindungsgemäßen Speicherbehälters und die bereits erwähnte relativ geringe thermische Last im Bereich der Spitze des Kegels kann auf eine bei herkömmlichen Speicherbehältern für heiße Fluide erforderliche Kühlung des Fundaments bzw. auch des Erdreichs unter dem Fundament vorteilhaft verzichtet werden.

Insgesamt zeigt die vorliegende Erfindung eine Vielzahl von Einsparungsmöglichkeiten bei der Erstellung eines solchen Speicherbehälters auf, die sich z.T. auch zusätzlich in geringerem Wartungsaufwand niederschlagen. Es wird somit eine wirtschaftlich sehr interessante Lösung vorgeschlagen.

Die Erfindung sowie weitere Ausgestaltungen der Erfindung werden im Folgenden anhand des in den Figuren dargestellten Ausführungsbeispiels näher erläutert.

Die Figur 1 zeigt einen Ausschnitt einer Schnittdarstellung eines erfindungsgemäßen Speicherbehälters.

Die Figur 2 zeigt einen Ausschnitt einer Schnittdarstellung eines alternativen Speicherbehälters.

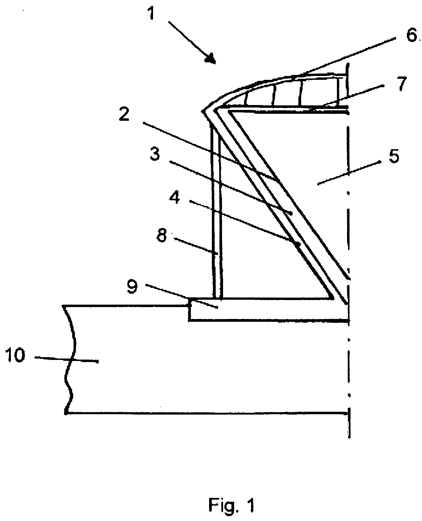

Im Einzelnen zeigt die Figur 1 einen Speicherbehälter 1, der drei ineinander liegende Schalen 2, 3, 4 in Form eines auf der Spitze stehenden geraden Kreiskegels aufweist. Eine Innenschale 2 wird von einer thermischen Dämmschicht 3 und diese wiederum von einer Außenschale 4 umgeben. Das Innere der Innenschale ist dazu geeignet, ein heißes Fluid 5 aufzunehmen und wird in vertikaler Richtung von einem Dach 6 mit einer abgehängten Isolierung 7 begrenzt. Die Außenschale 4 wird durch Stützen 8 auf einem Fundament 9 abgestützt, das den Speicherbehälter im Erdreich 10 verankert. In diesem Beispiel ist die Innenschale 2 als gerader Kreiskegel mit einem für die vorliegende Erfindung besonders vorteilhaften Öffnungswinkel von ca. 70° dargestellt. Bevorzugt sind in diesem Beispiel die Außenschale 4 und die Stützen 8 als Beton-Konstruktion ausgeführt.

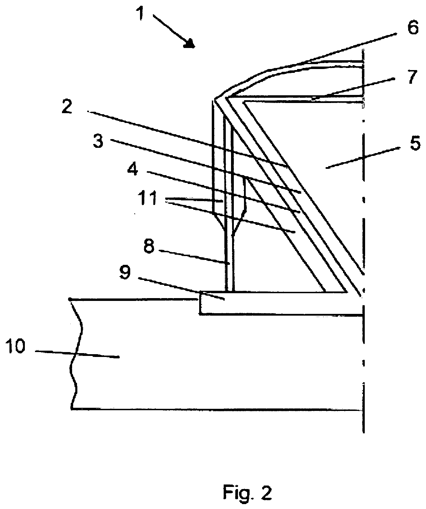

Die Figur 2 zeigt einen Speicherbehälter 1 der drei ineinander liegende Schalen 2, 3, 4 in Form eines auf der Spitze stehenden geraden Kreiskegels aufweist. Eine Innenschale 2 wird von einer thermischen Dämmschicht 3 und diese wiederum von einer Außenschale 4 umgeben. Die Außenschale 4 ist in diesem Beispiel zusätzlich von einer Außendämmung 11 umgeben, die z.T. auch die Stützen 8 umgibt. Für dieses Beispiel wurde als Außenschale 4 eine Stahl-Konstruktion gewählt. Diese darf mit einer höheren Temperatur beaufschlagt werden als eine Beton-Konstruktion. Daher kann in diesem Beispiel die thermische Dämmschicht 3 dünner gewählt werden und/oder sie darf aus einem Material mit schlechteren Wärmedämmeigenschaften bestehen. Die lastabtragend ausgebildete Außenschale 4, die in diesem Beispiel als Stahl-Konstruktion ausgebildet ist, rückt aufgrund des Vorhandenseins einer zusätzlichen Außendämmung 11 sozusagen weiter ins Innere des Speicherbehälters 1.

Demgegenüber bildet die lastabtragend ausgebildete, als Beton-Konstruktion, bevorzugt unter zumindest teilweiser Verwendung von mit Stahl bewehrtem Beton (sog. Stahlbeton), ausgeführte Außenschale 4 im zu der Figur 1 gehörenden Ausführungsbeispiel 1 die Außengrenze des Speicherbehälters 1.

Das Innere der Innenschale ist in dem der Figur 2 zugeordneten Ausführungsbeispiel ebenfalls dazu geeignet, ein heißes Fluid 5 aufzunehmen und wird in vertikaler Richtung von einem Dach 6 mit einer abgehängten Isolierung 7 begrenzt. Die Außenschale 4 wird durch Stützen 8 auf einem Fundament 9 abgestützt, das den Speicherbehälter im Erdreich 10 verankert.

## Patentansprüche

1. Speicherbehälter (1) zur Aufnahme eines Fluids (5) mit einer Temperatur von mindestens 200°C aufweisend eine Außenschale (4), eine Innenschale (2) sowie eine dazwischen liegende thermische Dämmschicht (3), **dadurch gekennzeichnet, dass** die Innenschale (2) in Form eines auf der Spitze stehenden geraden Kreiskegels ausgeführt ist.

2. Speicherbehälter (1) nach Anspruch 1, **dadurch gekennzeichnet, dass** die Innenschale (2) schwimmend auf der thermischen Dämmschicht (3) aufliegt, die ihrerseits bevorzugt lastabtragend ausgebildet ist bevorzugt ebenfalls in Form eines auf der Spitze stehenden geraden Kreiskegels.

3. Speicherbehälter (1) nach Anspruch 1 oder 2, **dadurch gekennzeichnet, dass** die Außenschale (4) lastabtragend ausgebildet ist, bevorzugt ebenfalls in Form eines auf der Spitze stehenden geraden Kreiskegels oder bevorzugt als lastaufnehmendes Vieleck, welches besonders bevorzugt innen mit einer Auskleidung versehen ist, welche die Form eines auf der Spitze stehenden geraden Kreiskegels als nach innen gewandte Oberflächenform bildet.

4. Speicherbehälter (1) nach einem der Ansprüche 1 bis 3, **dadurch gekennzeichnet, dass** eine mechanische Trennschicht zwischen der Innenschale (2) und der thermischen Dämmschicht (3) vorgesehen ist.

5. Speicherbehälter (1) nach einem der Ansprüche 1 bis 4, **dadurch gekennzeichnet, dass**, insbesondere bei hohen Temperaturen des Fluids (5), lediglich entlang einiger weniger Erzeugenden des geraden Kreiskegels Sicken zur Kompensation von Schwankungen in der thermischen Ausdehnung des Materials der Innenschale (2) vorgesehen sind.

6. Speicherbehälter nach einem der Ansprüche 1 bis 5, **dadurch gekennzeichnet, dass** der Öffnungswinkel des die Innenschale (2) formenden geraden Kreiskegels im Bereich von 65° bis 75° liegt.

7. Speicherbehälter (1) nach einem der Ansprüche 1 bis 6, **dadurch gekennzeichnet, dass** die Innenschale (2) zum Speichern eines chlorhaltigen Fluids (5), insbesondere eines chloridhaltigen flüssigen Salzes (5), geeignet ausgebildet ist.

8. Verwendung eines Speicherbehälters (1) nach einem der Ansprüche 1 bis 7 zur Speicherung von in einem solarthermischen Kraftwerk umgewandelter Sonnenenergie in Form eines heißen Fluids (5), bevorzugt eines heißen flüssigen Salzes (5) mit einer Temperatur im Bereich von 500°C bis 650°C, bevorzugt 570°C bis 600°C, besonders bevorzugt 590°C.

9. Verwendung eines Speicherbehälters (1) nach einem der Ansprüche 1 bis 8 als Einsatz in einem herkömmlichen, beispielsweise in der Form eines Zylinders ausgebildeten Speicherbehälter.

## Claims

1. Storage tank (1) for receiving a fluid (5) with a temperature of at least 200°C, having an outer shell (4), an inner shell (2) and a thermal insulating layer (3) lying between them, **characterized in that** the inner shell (2) is designed in the form of a straight circular cone standing on the apex.

2. Storage tank (1) according to Claim 1, **characterized in that** the inner shell (2) lies floatably on the thermal insulating layer (3) which, in turn, is preferably designed to be load-removing, preferably likewise in the form of a straight circular cone standing on the apex.

3. Storage tank (1) according to Claim 1 or 2, **characterized in that** the outer shell (4) is designed to be load-removing, preferably likewise in the form of a straight circular cone standing on the apex or preferably as a load-absorbing polygon which is especially preferably provided on the inside with a lining which takes the form, as an inwardly facing surface shape, of a straight circular cone standing on the apex.

4. Storage tank (1) according to one of Claims 1 to 3, **characterized in that** a mechanical separation layer is provided between the inner shell (2) and the thermal insulating layer (3).

5. Storage tank (1) according to one of Claims 1 to 4, **characterized in that**, particularly when the fluid (5) has high temperatures, beads for compensating fluctuations in the thermal expansion of the material of the inner shell (2) are provided solely along a few generatrices of the straight circular cone.

6. Storage tank according to one of Claims 1 to 5, **characterized in that** the apex angle of the straight circular cone forming the inner shell (2) is in the range from 65° to 75°.

7. Storage tank (1) according to one of Claims 1 to 6, **characterized in that** the inner shell (2) is designed suitably for storing a chlorine-containing fluid (5), in particular a chloride-containing liquid salt (5).

8. Use of a storage tank (1) according to one of Claims 1 to 7 for the storage of solar energy, converted in a solar-thermal power plant, in the form of a hot fluid (5), preferably of a hot liquid salt (5) with a temperature in the range of 500°C to 650°C, preferably 570°C to 600°C, especially preferably 590°C.

9. Use of a storage tank (1) according to one of Claims 1 to 8 as an insert in a conventional storage tank designed, for example, in the form of a cylinder.

## Revendications

1. Réservoir de stockage (1) destiné à contenir un fluide (5) avec une température d'au moins 200°C présentant une coque extérieure (4), une coque intérieure (2) ainsi qu'une couche d'isolation thermique (3) agencée entre celles-ci, **caractérisé en ce que** la coque intérieure (2) est réalisée sous la forme d'un cône circulaire droit posé sur la pointe.

2. Réservoir de stockage (1) selon la revendication 1, **caractérisé en ce que** la coque intérieure (2) repose de façon flottante sur la couche d'isolation thermique (3), qui est de son côté réalisée de préférence sous forme portante, de préférence également sous la forme d'un cône circulaire droit posé sur la pointe.

3. Réservoir de stockage (1) selon la revendication 1 ou 2, **caractérisé en ce que** la coque extérieure (4) est réalisée sous forme portante, de préférence également sous la forme d'un cône circulaire droit posé sur la pointe ou de préférence sous la forme d'un polygone de reprise de charges, qui est de préférence encore muni intérieurement d'un recouvrement, qui constitue la forme d'un cône circulaire droit posé sur la pointe comme forme de la surface tournée vers l'intérieur.

4. Réservoir de stockage (1) selon l'une quelconque des revendications 1 à 3, **caractérisé en ce qu'**il est prévu une couche de séparation mécanique entre la coque intérieure (2) et la couche d'isolation thermique (3).

5. Réservoir de stockage (1) selon l'une quelconque des revendications 1 à 4, **caractérisé en ce que**, en particulier pour de hautes températures du fluide (5), il est prévu uniquement le long de quelques peu nombreuses génératrices du cône circulaire droit des moulures pour la compensation de fluctuations dans la dilatation thermique du matériau de la coque intérieure (2).

6. Réservoir de stockage (1) selon l'une quelconque des revendications 1 à 5, **caractérisé en ce que** l'angle d'ouverture du cône circulaire droit formant la coque intérieure (2) se situe dans la plage de 65° à 75°.

7. Réservoir de stockage (1) selon l'une quelconque des revendications 1 à 6, **caractérisé en ce que** la coque intérieure (2) est réalisée de façon appropriée pour le stockage d'un fluide chloré (5), en particulier d'un sel liquide chloruré (5).

8. Utilisation d'un réservoir de stockage (1) selon l'une quelconque des revendications 1 à 7 pour le stockage d'énergie solaire convertie dans une centrale thermique solaire, sous la forme d'un fluide chaud (5), de préférence d'un sel liquide chaud (5) avec une température comprise dans la plage de 500°C à 650°C, de préférence de 570°C à 600°C, et de préférence encore de 590°C.

9. Utilisation d'un réservoir de stockage (1) selon l'une quelconque des revendications 1 à 8 comme insert dans un réservoir de stockage conventionnel, réalisé par exemple sous la forme d'un cylindre.
